# EUROPEAN PATENT SPECIFICATION

(11) **EP 0 337 336 B1**
(45) Date of publication and mention of the grant of the patent: **14.12.1994**
(21) Application number: 89106255.6
(22) Date of filing: 08.04.1989
(51) Int. Cl.: H04N 7/087

(54) **Applications for information transmitted in the vertical retrace interval of a television signal**
Anwendungen für die in den vertikalen Austastlücken eines Fernsehsignalesgesendeten Daten
Applications pour les informations transmises pendant l'intervalle de retour vertical d'un signal de télévision

(30) Priority: 15.04.1988 GB 8808964
(43) Date of publication of application: 18.10.1989
(73) Proprietor: RCA Thomson Licensing Corporation, Princeton, NJ 08540 (US)
(72) Inventor: Aschwanden, Felix, CH-8800 Thalwil (CH)
(74) Representative: Hartnack, Wolfgang, Dipl.-Ing.

(56) References cited:
- FUNKTECHNIK vol. 41, no. 6, June 1986, pages 249 - 251, Heidelberg, DE; C.L.M.: "Videorecorder-Programmieren mit VPV"
- ELECTRONICS COMPONENTS & APPLICATIONS, vol. 8, no. 3, 1988, pages 175 - 185, Eindhoven, NL; J. KINGHORN: "Enhanced computer-controlled teletext circuit SAA5243"
- FUNKSCHAU vol. 59, no. 5, February 1987, pages 51 -53, München, De; KLEINHAUS et al.: "VPS-DECODER-SONDERFUNKTIONEN: KEINE FERNSEHSENDUNG MEHR VERSAEUMEN"

## Description

### BACKGROUND

The introduction of VPS (Video Program System) and VPV (Videotext Programmed VCR), now also called VPT (Videorecorder Programming by Text), in Europe opens new opportunities for increasing the user-friendliness of today's TV receivers. Apart from simplifying the programming of VCRs, for which the two systems originally were intended, further features can be provided in connection with the teletext service. Automatic station name identification and the display of the title of the current program will be described.

The original purpose of adding the VPS signal to the image-representative TV broadcast signal was to simplify the use of home video recorders. Prior to VPS, these recorders were programmed by means of a timer, which started and stopped the VCR according to the time when the desired TV program of interest was scheduled for transmission.

Occasionally, the program of interest could not be correctly recorded, for example due to delay in the completion of the previous program.

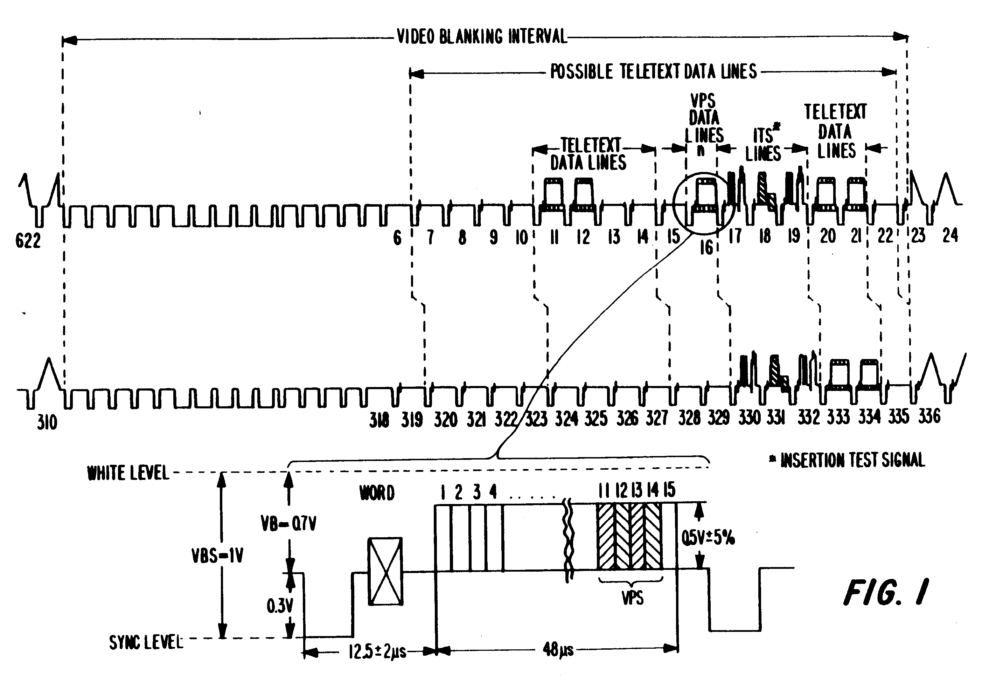

The VPS signal was intended to overcome this drawback by providing an accurate indication of the starting time of a new program. Some properties and the data format of the VPS signal are shown in Fig. 1 of the drawings and are briefly explained below. A more detailed description is available in the literature, (see for example, "VPS-Ein neues System zur beitragsgesteuerten Programmaufzeichnung", Rundfunktechnische Mitteilungen, Heft 4, 1985).

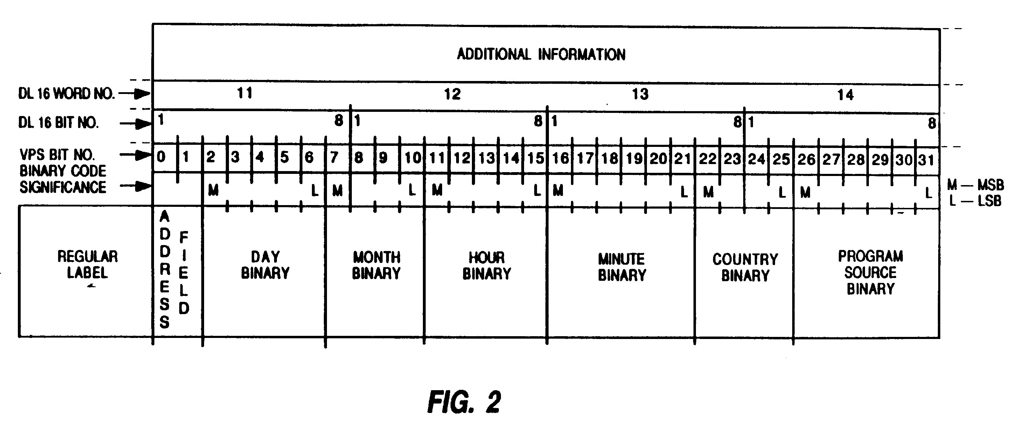

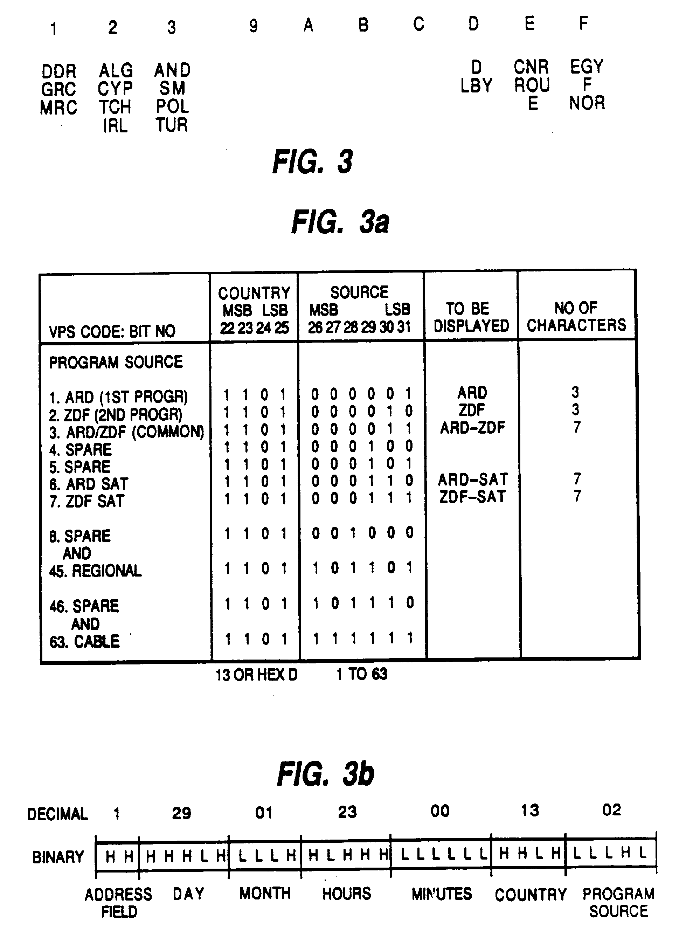

On data line 16 in the vertical blanking (retrace) interval of the TV broadcast signal, the VPS program identification code occupies 4 bytes (11 - 14). The related information of these 4 bytes is shown in Fig. 2 of the drawings, where bits 2 - 21 specify day, month, hours and minutes of the originally scheduled start of the transmitted program. Bits 22 - 25 denote the country and bits 26 - 31 denote the transmitting station or program source. Fig. 3 of the drawings illustrates the assignment of the country codes to Europe, North Africa and Middle East according to a proposal of E.B.U. (European Broadcasting Union). Although the same code is used by several countries, no interaction occurs since the countries which have the same codes are far away from each other.

Fig 3a. illustrates an example of the appropriate codes for the German network ZDF. The country code is 13 or HEX D and a total of sixty-three program sources are conceivable, some of which are listed. Bits number zero and one (see Fig. 2) specify four different address ranges. Today, only range "one" is in use, so these two bits are neglected for the remaining discussion.

To make the programming of VCRs even more convenient and reliable, the VPV system (Videotext Programmed VCR) was developed (See "Videotext programmiert Videoheimgeräte (VPV)", Rundfunktechnische Mitteilungen, Heft 3, 1986).

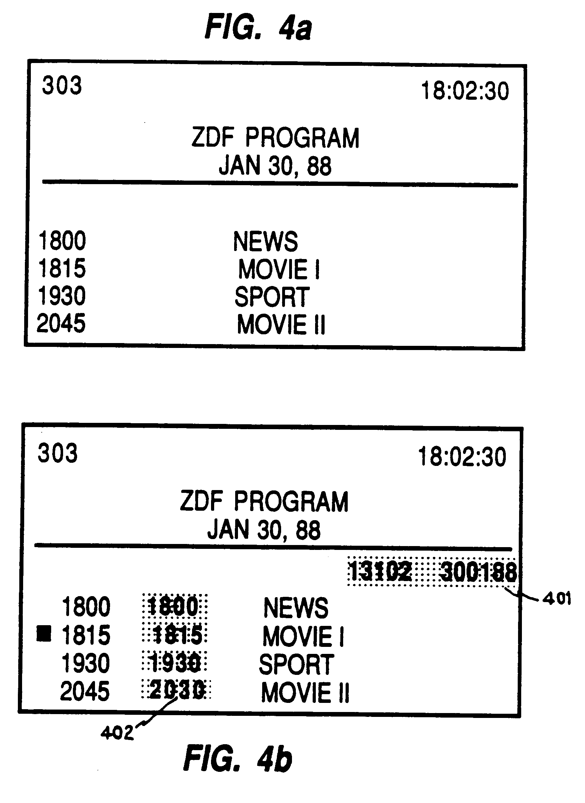

Recording by means of VPV is directed by the automatic transfer of the necessary and correct information to the VCR from the TV program-pages of the teletext service, where the program to be recorded is selected. The user only has to display the appropriate teletext program page and then move a cursor to the desired program title. Upon pressing an appropriate button on the remote control, the necessary VPS program identification information is transferred to the VCR. As can be seen from comparing Figs. 4a and 4b, certain VPS data, indicated by the reference numerals 401 and 402 in Fig. 4b, are concealed (i.e. not displayed) under normal conditions and can be made visible by pressing a "reveal" button of the remote control transmitter. Figs. 4a and 4b also show that the concealed data indicated by reference numbers 401, 402 in the teletext TV program-pages correspond exactly to the actually transmitted VPS program identification code, except for a binary to decimal conversion. That is, the data indicated by number 401 corresponds to the sequence of country code (13) address field (1), program source (02), and date (300188). The data indicated by reference number 402 corresponds to the originally scheduled transmission times of the various programs (VPS times).

In the VPV application, if the user decides to record a program (see Fig. 4a) scheduled for example at 18:15, he simply moves the cursor to that position and after pressing the appropriate remote control push button, the relevant concealed data (see Fig. 4b) 3001 (day, month) 18:15 (hour, minutes) and 13102 (country, program source) are automatically transferred to a VCR. Note that the "1" in "102" represents address field one, bits number 0 and 1 of the VPS signal. Thereafter, the VCR continuously checks the transmitted VPS signal and upon coincidence the VCR starts to record.

It should be mentioned that the scheduled time 20:45 and the VPS-time 20:30 for "Movie II" of Fig. 4b are not identical. This is because the scheduled time has been updated in the meantime after it turned out that the sport event at 19:30 took longer than was expected when the program schedule was first published. The VPS time always remains unchanged since it is assigned to the program and not to the actual time.

Thus, each of station identification (program source), scheduled transmission time and program title information for many different scheduled future TV transmissions are available for use by a VCR or television receiver equipped to process, respectively, VPS, VPV or teletext information. However, the user of a conventional television receiver is not able to utilize such information to full advantage. That is, while certain TV receivers (for example Grundig Models CUC 2600/2800) are equipped with a teletext decoding system and VCRs may be equipped with a VPS decoder (see "Decoder for an Automatic Video Program Identification System (VPS)", IEEE Transaction on Consumer Electronics, Vol. CE-32, No. 3, August 1986, pp. 162 - 168), the two decoding systems are not customarily included in a television receiver.

It has been suggested (see IEEE Transactions article cited above) that a VPS decoder can be connected in an unspecified manner in a TV receiver for providing station identification or decoding of TV sound status. In addition, other types of decoder systems for retrieving supplementary data from a broadcast television signal have been proposed (see, for example, U.S. Patent US-A-4,635,121 - Hoffman et al. granted January 6,1987).

The signals needed for programming of VCRs by VPV including VPS are stated for example in "Videorecorder-Programmieren mit VPV", Funktechnik, vol.41, no 6, June 1986, pages 249-251, Heidelberg.

In any event, the number of receivable TV programs increases yearly due to the expansion of cable networks and satellite service. Unfortunately this development is confusing for the user and this confusion increases when a preferred program is time delayed from its originally scheduled broadcast time.

Therefore, it is desirable to provide support to the user through unambiguous station and program identification. The necessary information is available in a combination of the VPS and teletext signals and systems and methods are described whereby this combination of information can be processed for automatic visual presentation to the viewer.

### SUMMARY OF THE INVENTION

The above mentioned object is solved according to the invention by the features specified in Claims 1 and 9 and by the advantageous solutions specified in the subclaims.

### THE DRAWINGS

In the drawings:
Figure 1 illustrates a composite video signal during the vertical blanking interval with VPS data on data line 16 and teletext data on lines 11-14 and 20-21;
Figure 2 illustrates the data format of the VPS information on data line 16;
Figure 3 illustrates the E.B.U. assignment of country codes;
Figure 3a illustrates country and source codes for the West German stations;
Figure 3b illustrates one example of VPS code corresponding to the second West German network, for the program of January 29, 1988 at 23:00;
Figures 4a and 4b illustrate, respectively, a single teletext program page (#303) in the "normal display" and "revealed" modes;
Figure 5 is a block diagram of a portion of a TV receiver constructed in accordance with the present invention and incorporating teletext and VPS decoders;
Figure 6 is a flowchart for a title search method in accordance with the present invention;
Figure 7 is a partial block diagram of a modification of the TV receiver of Figure 5 arranged to store program titles in advance;
Figure 8 illustrates a listing of TV programs available at a particular time, making use of VPS, VPV and teletext information; and
Figure 9 illustrates the manner in which station identification and program title may be displayed on screen in accordance with the present invention.

### DETAILED DESCRIPTION

This invention relates to a system which automatically displays information such as program source (station identification) and the title of the running program, when the TV set or other TV signal processor has been turned on or when a new channel is selected. It is applicable in those countries using teletext or the like. The teletext system in Europe transmits, apart from other material, a listing of the updated TV program pages. To display the TV program title, one has therefore to select the appropriate teletext page from the listing.

That is, in order to display the title of the running program (i.e. the program which is being received and/or displayed) a search must be made to find the teletext page containing that program. Demanding a fixed page number is not reliable, since the various networks in Europe use different page numbers or change them occasionally.

The search is made according to this invention in a manner which is the reverse of programming a VCR by means of VPS and VPV. Thus the VPS program identification code of the received station is first read from the running program signal and then correlation in the teletext data stream is searched for.

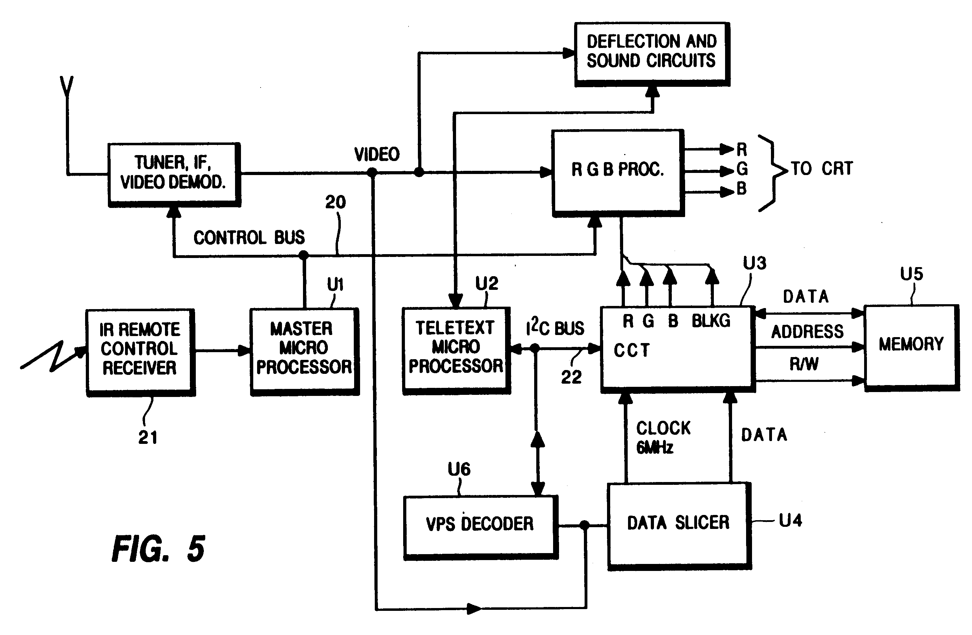

Referring to the drawing, Fig. 5 shows part of the block diagram of a current TV receiver with a built-in teletext decoder circuit. A microprocessor (µP) (e.g. Siemens Type SDA 2011) U1 controls the various stages of the TV receiver by means of a control bus 20 upon receiving a command from an IR remote control receiver 21. The teletext decoder comprises a microprocessor U2, which controls, by means of an I²C bus 22, the function of a CCT circuit U3 (CCT = Computer Controlled Teletext decoder). For a more detailed description of the I²C bus 22, reference should be made to the Philips Technical Publication of 1986 entitled "I²C Bus Specification". See also the Philips Data Handbook - IC 02a, published in 1986, with particular reference to the integrated circuits type SAA 5230 and SAA 5240 described therein.

In the receiver of Fig. 5, composite video is fed to a data slicer U4 (e.g. Siemens Type SAA 5230), which separates the serial teletext data stream from video and which provides a line-locked 6 MHz master clock frequency. Furthermore, a VPS decoder circuit U6, which is added to the standard TV chassis for purposes of the present invention, is connected to the I²C bus 22 and is provided with composite video information. A suitable VPS decoder circuit is described, for example, in the Siemens publication "IC's for Entertainment Electronics", VPS System, Siemens, Edition 5 (1986) where the Siemens Type SDA 5232 and SDA 5640 IC's are shown.

The CCT circuit U3 provides a large number of different functions selectable via the I²C bus 22. Essential for the title search is that data can be read from or written to a teletext memory U5 at any desired memory location through the I²C bus 22. As a result, messages created in microprocessor U2 can be displayed on the screen of the TV receiver or microprocessor U2 can read and manipulate text stored in memory U5. Basically, the CCT circuit U3 decodes the incoming teletext data stream, stores the selected pages in memory U5 and provides R, G, B and blanking signals when the selected page is to be displayed on the CRT (not shown).

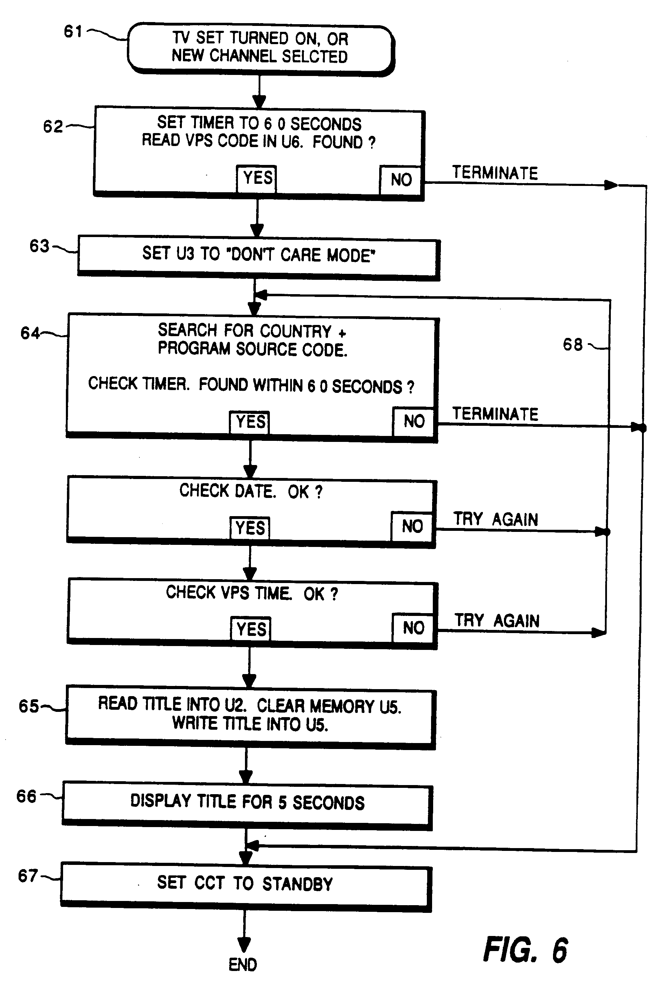

Referring to Fig. 6, the operating sequence according to one aspect of the invention will be described. The title search sequence is initialized upon selecting a new channel or when the TV set is turned on (see block 61). Microprocessor U2 reads the VPS code extracted from the accompanying image-representative video signal by VPS decoder U6 (block 62) and also forces teletext decoder U3 into the "don't care magazine - and page number" status (block 63). In this mode of operation decoder U3 ignores page numbers. It decodes the incoming teletext data stream byte by byte and writes the text into the memory U5. The microprocessor U2 reads the memory content and searches for the concealed VPV program identification information (block 64), transmitted along with the program pages (see Fig. 4b). The complete page however, cannot be read and analyzed before a new page appears, due to the fact that there is a speed limitation or bottleneck associated with the I²C bus 22. Therefore, microprocessor U2 is controlled, for example, to read only in those areas (lines and portions of lines) where the relevant concealed data is expected. Other search algorithms are possible.

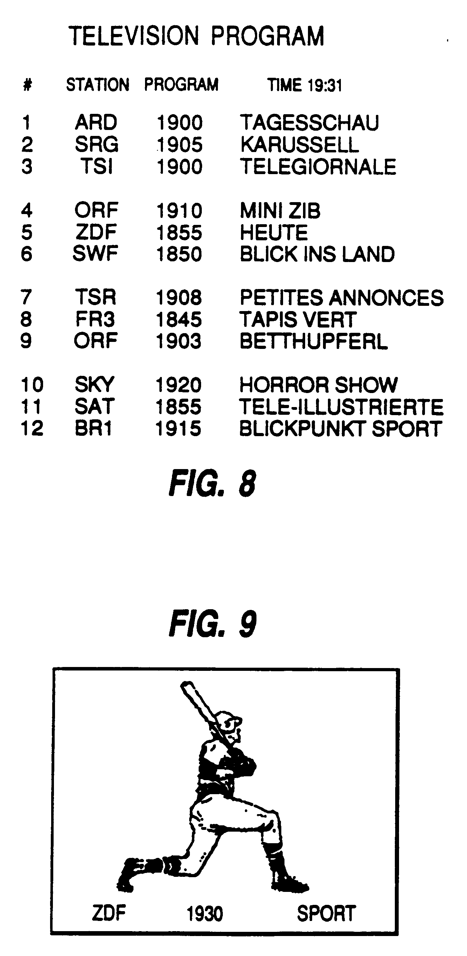

Once correlation (a match or "yes" indications), between the VPS code of the running program and the concealed data in the teletext data stream is recognized, the appropriate text row, containing the title of the running program, is read into microprocessor U2 (block 65). Simultaneously, microprocessor U2 erases memory U5 via the I²C bus 22 and turns the acquisition circuit in teletext decoder U3 off. Thus, no further teletext data is decoded and memory U5 remains empty. The title of the running program is then transferred from microprocessor U2 into any desired location in memory U5. Finally the CCT circuit U3 is set into a mixing mode (block 66) thereby superimposing ("punching") the title onto the CRT (Fig. 9). Shortly afterwards teletext decode circuit U3 is forced into "standby" (block 67) and the title display operation is terminated.

This search operation would last indefinitely, should no correlation be achieved. This occurs if a weak signal is received and the teletext signal is not decodeable or when the TV set is connected to a VCR. An additional timerloop automatically terminates the search operation after 30 - 60 seconds, sufficient to allow the program-pages to reappear in the serial teletext data stream. Apart from the VPS decoder U6, no additional hardware is needed. The required software, see flow chart, Fig. 6, can be added into the ROM of the single chip microprocessor U2.

Some transmitters in Europe also provide program pages for a whole week in advance or pages from other stations. In order to achieve unambiguous operation the correlation for the relevant information i.e. country, program source code, date and VPS time must be obtained substantially simultaneously. If one element is not in correlation the complete search sequence is restarted by means of the "try again" loops 68 in Fig. 6.

Due to the serial nature of the teletext signal, it can take up to one minute to find and display the desired title. In order to make the titles available within a fraction of a second, an extra memory preferably is provided, which stores for each station the titles of a complete day's programs in advance.

Such a solution is feasible in Europe, where TV programs start late in the morning or only in the afternoon. The teletext service along with a test pattern however starts earlier, so there is time available between the beginning of the teletext service and the main program to search and store program titles. The VPS signal on data line 16 is also available when the test chart or pattern is transmitted.

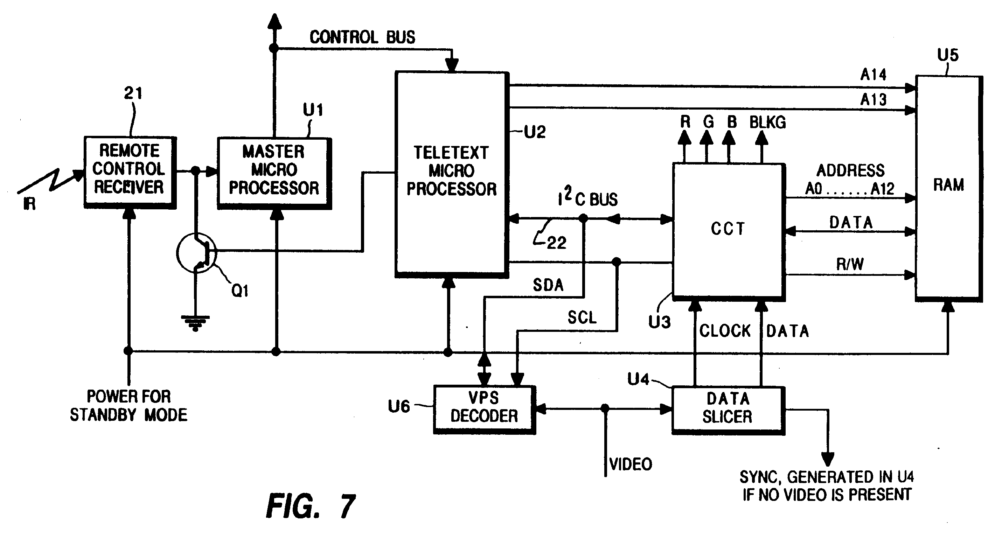

Fig. 7 shows the block diagram of a solution allowing titles to be stored in advance. Fig. 7 is similar to Fig.5 except for a larger size memory U5 (such as the Hitachi Type HM 62256 - 32K Byte RAM) with associated additional address wires A14, A15, a software clock program (time of day) in microprocessor U2 and a transistor Q1. The transistor Q1 is connected between microprocessor U2 and a remote control input of the master microprocessor U1. The function of the software clock is to set the start of the title search sequence, e.g. at 9:00 or 14:00, when test charts and teletext are transmitted.

The remote control receiver 21 has an open collector output which is high when no IR commands are received. As a result microprocessor U1 can also be controlled by means of transistor Q1, for instance to select the channels when the title search sequence is in progress. Before this sequence is described, one must consider the requirements for the memory U5.

The teletext program tables are usually transmitted on three adjacent pages, each carrying a part of the day's program titles. The top third of a page contains the page title in large characters (Fig.4) and need not be stored. As a result, the necessary space in memory U5 is two teletext pages only per channel. Such a page measures 40 columns by 24 rows (∼1 K byte) and 2 K bytes of memory per channel are therefore sufficient. A part of the space in memory U5, namely 8 K byte, is reserved for normal teletext operation. As a result, if a 256 K bit (32 K byte) memory U5 is used, the titles of (32 - 8)/2 = 12 different stations can be stored. The appropriate number of channels for a 1 M bit memory is sixty.

Speed should also be considered in the improved advanced page storage version described above, since a complete program page must be processed, rather than a single title. One approach is first to memorize the page numbers (e.g. 303 in Fig. 4) of the program pages found. Here again the search operation is time limited to 30 - 60 seconds, after which the memorized pages are recalled, squeezed into two pages and stored in the desired location in memory U5.

It is possible that users may turn the TV set on while the search sequence is in progress. In that case, the search sequence has lower priority and the simpler "title search program" is activated, as described earlier. Later, when the user turns the TV set off, the advance page search sequence may continue.

When the TV set is switched off by means of the remote control, the set is in a "standby" mode and some circuits are still powered and fully operating. These are the master microprocessor U1, the remote control receiver 21, microprocessor U2 and memory U5, to maintain the software time of day clock and the stored titles in memory U5 (Fig. 7). But if the TV is switched off completely by means of the main switch, the software clock is "lost", but can be automatically reprogrammed the next time the TV set is turned on. This is obtained through reading the rolling or running time of day provided on each teletext page (Fig. 4) into the microprocessor U2 which in turn sets the time of the software clock.

Two-tuner-TVs are already on the market today, where the second tuner serves to provide a "Picture-in-Picture" function. This second tuner could also be used for the "Text-in-Picture" system described above. As a result, the conflict between watching TV and simultaneously searching for program titles in advance could be avoided.

Finally, it should be pointed out once more, that the systems described above are fully automatic and need no action by the user or additional buttons on the remote unit.

As previously mentioned, the large number of receivable TV programs makes an overview of available programs at a given time difficult to obtain. As a consequence, "channel hopping" becomes popular, even inevitable where the viewer hopes to get an idea about the content of the running programs. But instead, by channel hopping, the viewer gets only a "snapshot" which tells very little. A complete and accurate list of the titles of all current programs would be more useful.

Fig. 8 shows such a list, produced by using VPS and VPV information which is available in the described system. The list was created at 19:31, when the TV set was turned on, or may be provided on request, upon pressing button No. 0 on the remote control transmitter (not shown). This "0" button is not assigned to a particular channel but is used when a teletext page is selected (e.g. page 300). As a result another feature can be provided without the need for extra keys on the remote control.

The list of Fig. 8 can be generated in two ways. The accurate method is to use the various VPS identification times and search the appropriate titles in the memory U5, where all titles have been stored in advance. Since the TV set must first be swept through all stations in order to read the actual VPS time on data line 16, this method may last a few seconds. The second method is fast and uses the running time, which is transmitted on each teletext page, as its reference. However, it takes no account of program delays and is therefore less reliable.

Identification of the received station is another desirable feature and can be obtained by using country and program source codes of the VPS signal (Fig. 3b which illustrates the code for a program of January 29, 1988, transmitted by the second West German network (ZDF) at 23:00). After a conversion to characters by means of a stored look-up table, the station names can be displayed as shown in Figs. 8 and 9. The necessary look-up table is provided in the program ROM of the microprocessor U2 (Fig. 5). An agreement regarding the assignment of these codes to the various countries and TV stations already exists.

No sync and video signals are available when channel No. 0 is selected in order to display the program list. But sync at least is required to maintain the operation of the deflection circuits, when the list should be displayed. Fortunately, the data slicer U4 itself can produce an auxiliary sync signal when the external sync is missing (Fig. 7).

## Claims

1. A television signal processing apparatus wherein the received television signals include image-representative information and a plurality of accompanying segments of supplementary information including program identification information, and a listing of program title information associated with program source identification information, the supplementary information being encoded during vertical blanking intervals of the broadcast signal, said television signal processing apparatus comprising:
tuning means for selectively receiving television signals transmitted by individual program sources, the received signals including image-representative information, and accompanying segments of supplementary information,
first signal decoder means (U2) for decoding said listing including program title information and associated program source identification information,
memory means (U5) for storing and retrieving at least said program title information and associated program source identification information decoded by said first signal decoder means,
second signal decoder means (U6) for decoding said program identification information accompanying related image-representative information
a first controller means (U3) coupled to said tuning means, said first (U2) and second (U6) signal decoder means and said memory means (U5) for selectively transferring said segments of supplementary information from said first signal decoder means (U2) to said memory means (U5), said first controller means (U3) also retrieving said segments from said memory means (U5); **characterized in that**, in order to automatically display information identifying a currently running television program,
said first controller means (U3) further comprises :
means to enable said second signal decoder means (U6) to decode said program identification information accompanying related image-representative information, upon initial reception of signals from an individual program source by said tuning means,
means to enable said first signal decoder means (U2) to identify a program source identification information within said listing identical with said decoded program identification information,
means to store at least the associated program title information of said listing in said memory means (U5) corresponding to said currently running television program, and
means to transfer said program title information from said memory means (U5) for automatic display thereof along with the related image-representative information.

2. A television signal processing apparatus according to claim 1 **characterized in that** said second signal decoder means (U6) includes means for decoding program identification information comprising digitally encoded originally scheduled broadcast time and broadcast station identification characters.

3. A television signal processing apparatus according to claim 1 or 2 **characterized in that** said listing comprises teletext information and said first signal decoder means comprises a teletext decoder system (U2).

4. A television signal processing apparatus according to claim 3 **characterized in that** said first controller means (U3) provides first control signals to said first signal decoder means (U2), upon initial reception of a running program, to cause said first signal decoder means (U2) to search teletext transmission for program source identification information matching corresponding information provided by said second signal decoder means (U6).

5. A television signal processing apparatus according to claim 3 or 4 **characterized in that** said second signal decoder means (U6) comprises a VPV or VPS decoder system.

6. A television signal processing apparatus according to claim 4 **characterized in that** said first controller means (U3) transfers said program source identification information from said memory means (U5) for automatic display along with said associated program title information.

7. A television signal processing apparatus according to claim 4 **characterized in that** said program identification information and said listing also both include a time code for providing supplementary program identification, and said first controller means (U3) is operative to cause said first signal decoder means (U2) to sequentially search teletext transmissions for program source identification information, determine occurence of a match with corresponding information of the program identification information of the running program and thereafter compare said time code identification information provided by said first and second decoder means.

8. A television signal processing apparatus according to claim 1 **characterized in that** said first signal decoder means (U2) and said memory means (U5) are activated to store program source identification information and program title information prior to reception of image-representative signals.

9. A method of processing received television signals wherein said television signals include image-representative information and a plurality of segments of accompanying supplementary information including program identification information having a program-identifying time code and a listing including program title information associated with program source identification information, the supplementary information being encoded during vertical blanking intervals of the television signal, the method comprising:
tuning a television signal processor for selectively receiving signals transmitted by an individual program source, the received signals including said image-representative information and accompanying segments of supplementary information,
decoding said listing and said included program title information and associated program source identification information, storing said decoded listing and included program source identification information for subsequent retrieval,
decoding said program identification information accompanying related image-representative information,
comparing said last-named program identification information with said included program source identification information to identify matching information, and **characterized by** automatically displaying at least program title information associated with said included program source identification information upon identifying matching program identification information, along with related image-representative information.

10. A method of processing television signals according to claim 9 **characterized in that** said step of displaying further comprises displaying accompanying program source information upon identifying matching program identification information.

11. A method of processing television signals according to claim 9 or 10 **characterized in that** said listing comprises teletext information and said program identification information accompanying related image-representative information comprises VPS information.

12. A method of processing television signals according to claim 11 **characterized in that** said step of decoding said listing comprises, upon initial reception of a running program, searching accompanying teletext transmissions for program source identification information matching the program identification information recurring during vertical blanking intervals of said running program.

13. A method of processing television signals according to claim 9 **characterized in that** said step of decoding said listing comprises searching teletext transmissions received during a running program or received and stored prior to reception of a running program.

14. A method of processing television signals according to claim 9 or 10 **characterized in that** said steps of decoding said listing and comparing program identification information comprise the partial steps of searching teletext transmissions for program source identification information with a time code, obtaining a match with corresponding information of the program identification information of the running program and thereafter comparing the two time codes, obtaining a match of said time code information and thereafter retrieving corresponding title information from memory for display.

15. A method of processing television signals according to claim 9 **characterized in that** said step of decoding said listing and said included program source identification information includes decoding program title characters contained in said listing and further includes decoding program source identification information comprising digitally encoded originally scheduled transmission time and transmitting station identification characters.

## Patentansprüche

1. Vorrichtung zur Fernsehsignalverarbeitung, worin die empfangenen Fernsehsignale eine bilddarstellende Information und eine Mehrzahl von begleitenden Segmenten zusätzlicher Information enthalten, einschließlich der Programmkennungsinformation und einer Auflistung der Programmtitelinformation, die zu der Programmquellenkennungsinformation gehört, wobei die zusätzliche Information während der Bildaustastlücken des ausgestrahlten Signals kodiert ist, wobei die Vorrichtung zur Fernsehsignalverarbeitung folgendes enthält:
ein Abstimmittel für den wahlweisen Empfang von Fernsehsignalen, die von einzelnen Programmquellen übertragen werden, wobei die empfangenen Signale bilddarstellende Information und begleitende Segmente mit zusätzlicher Information enthalten,
ein erstes Signaldekodiermittel (U2) zum Dekodieren der Auflistung, welche die Programmtitelinformation und zugehörige Programmquellenkennungsinformation enthält,
ein Speichermittel (U5) zum Speichern und Abrufen mindestens der Programmtitelinformation und der zugehörigen Programmquellenkennungsinformation, die von dem ersten Signaldekodiermittel dekodiert wurde,
ein zweites Signaldekodiermittel (U6) zum Dekodieren der Programmkennungsinformation, welche die zugehörige bilddarstellende Information begleitet,
ein erstes Steuermittel (U3), das an das Abstimmittel, das erste (U2) und zweite (U6) Signaldekodiermittel und das Speichermittel (U5) gekoppelt ist, um wahlweise die Segmente von zusätzlicher Information von dem ersten Signaldekodiermittel (U2) zu dem Speichermittel (U5) zu übertragen, wobei das erste Steuermittel (U3) auch diese Segmente von dem Speichermittel (U5) abruft;
dadurch gekennzeichnet, daß zur automatischen Anzeige von Information, welche ein gegenwärtig laufendes Fernsehprogramm identifiziert,
das erste Steuermittel (U3) ferner folgendes enthält:
ein Mittel, welches ermöglicht, daß das zweite Signaldekodiermittel (U6) die Programmkennungsinformation dekodiert, welche die zugehörige bilddarstellende Information begleitet, zu Beginn des Signalempfangs von einer einzelnen Programmquelle über das Abstimmittel,
ein Mittel, welches ermöglicht, daß das erste Signaldekodiermittel (U2) eine Programmquellenkennungsinformation in der Auflistung identifiziert, welche mit der dekodierten Programmkennungsinformation identisch ist,
ein Mittel zur Speicherung von mindestens der zugehörigen Programmtitelinformation der Auflistung in dem Speichermittel (U5), welche dem gegenwärtig laufenden Fernsehprogramm entspricht, und
ein Mittel zur Übertragung der Programmtitelinformation von dem Speichermittel (U5), um diese automatisch gemeinsam mit der zugehörigen bilddarstellenden Information anzuzeigen.

2. Vorrichtung zur Fernsehsignalverarbeitung nach Anspruch 1, dadurch gekennzeichnet, daß das zweite Signaldekodiermittel (U6) Mittel zur Dekodierung der Programmkennungsinformation enthält, einschließlich digital kodierter Kennungszeichen für die ursprünglich geplante Sendezeit und Sendestation.

3. Vorrichtung zur Fernsehsignalverarbeitung nach Anspruch 1 oder 2, dadurch gekennzeichnet, daß die Auflistung Teletext-Information enthält und das erste Signaldekodiermittel ein Teletext-Dekodiersystem (U2) enthält.

4. Vorrichtung zur Fernsehsignalverarbeitung nach Anspruch 3, dadurch gekennzeichnet, daß das erste Steuermittel (U3) erste Steuersignale an das erste Signaldekodiermittel (U2) zu Beginn des Empfangs eines laufenden Programms liefert, um das erste Signaldekodiermittel (U2) zu veranlassen, die Teletext-Übertragung auf eine Programmquellenkennungsinformation zu durchsuchen, welche der entsprechenden Information entspricht, die von dem zweiten Signaldekodiermittel (U6) geliefert wird.

5. Vorrichtung zur Fernsehsignalverarbeitung nach Anspruch 3 oder 4, dadurch gekennzeichnet, daß das zweite Signaldekodiermittel (U6) ein VPV- oder VPS-Dekodiersystem enthält.

6. Vorrichtung zur Fernsehsignalverarbeitung nach Anspruch 4, dadurch gekennzeichnet, daß das erste Steuermittel (U3) die Programmquellenkennungsinformation von dem Speichermittel (U5) zur automatischen Anzeige gemeinsam mit der zugehörigen Programmtitelinformation überträgt.

7. Vorrichtung zur Fernsehsignalverarbeitung nach Anspruch 4, dadurch gekennzeichnet, daß sowohl die Programmquellenkennungsinformation als auch die Auflistung einen Zeitkode zur Bereitstellung einer zusätzliche Programmidentifizierung enthalten und das erste Steuermittel (U3) fähig ist, das erste Signaldekodiermittel (U2) zu veranlassen, die Teletext-Übertragungen sequentiell auf eine Programmquellenkennungsinformation zu durchsuchen, das Auftreten einer Übereinstimmung mit entsprechender Information der Programmkennungsinformation des laufenden Programms zu bestimmen und danach die Zeitkodekennungsinformation, die von dem ersten und zweiten Dekodiermittel geliefert wird, zu vergleichen.

8. Vorrichtung zur Fernsehsignalverarbeitung nach Anspruch 1, dadurch gekennzeichnet, daß das erste Signaldekodiermittel (U2) und das Speichermittel (U5) aktiviert werden, um die Programmquellenkennungsinformation und Programmtitelinformation vor dem Empfang von bilddarstellenden Signale zu speichern.

9. Verfahren zur Verarbeitung von empfangenen Fernsehsignalen, wobei die Fernsehsignale bilddarstellende Information und eine Mehrzahl von begleitenden Segmenten zusätzlicher Information enthalten, einschließlich der Programmkennungsinformation mit einem programmidentifizierenden Zeitkode und einer Auflistung, welche die Programmtitelinformation enthält, die zu der Programmquellenkennungsinformation gehört, wobei die zusätzliche Information während der Bildaustastlücken des Fernsehsignals kodiert ist, wobei das Verfahren folgendes einschließt:
Abstimmen eines Fernsehsignalprozessors zum selektiven Empfang von Signalen, die von einer einzelnen Programmquelle übertragen werden, wobei die empfangenen Signale die bilddarstellende Information und begleitende Segmente zusätzlicher Information enthalten,
Dekodieren der Auflistung und der enthaltenen Programmtitelinformation und der zugehörigen Programmquellenkennungsinformation, Speichern der dekodierten Auflistung und enthaltenen Programmquellenkennungsinformation zum anschließenden Abrufen,
Dekodieren der Programmkennungsinformation, welche die zugehörige bilddarstellende Information begleitet,
Vergleichen der letztgenannten Programmkennungsinformation mit der enthaltenen Programmquellenkennungsinformation zur Identifizierung von übereinstimmender Information und gekennzeichnet ist durch eine automatische Anzeige von mindestens der Programmtitelinformation, die zu der enthaltenen Programmquellenkennungsinformation gehört, bei Identifizierung von übereinstimmender Programmkennungsinformation, gemeinsam mit der zugehörigen bilddarstellenden Information.

10. Verfahren zur Fernsehsignalverarbeitung nach Anspruch 9, dadurch gekennzeichnet, daß der Schritt zur Anzeige ferner eine Anzeige von begleitender Programmquelleninformation bei Identifizierung von übereinstimmender Programmkennungsinformation enthält.

11. Verfahren zur Fernsehsignalverarbeitung nach Anspruch 9 oder 10, dadurch gekennzeichnet, daß die Auflistung Teletext-Information enthält und die Programmkennungsinformation, welche die zugehörige bilddarstellende Information begleitet, VPS-Information enthält.

12. Verfahren zur Fernsehsignalverarbeitung nach Anspruch 11, dadurch gekennzeichnet, daß der Schritt zum Dekodieren der Auflistung bei Beginn des Empfangs eines laufenden Programms ein Durchsuchen von begleitenden Teletext-Übertragungen auf Programmquellenkennungsinformation einschließt, welche der Programmkennungsinformation entspricht, die während der Bildaustastlücken des laufenden Programms wiederkehrt.

13. Verfahren zur Fernsehsignalverarbeitung nach Anspruch 9, dadurch gekennzeichnet, daß der Schritt zur Dekodierung der Auflistung ein Durchsuchen von Teletext-Übertragungen einschließt, die während eines laufenden Programm empfangen oder vor dem Empfang eines laufenden Programmes empfangen und gespeichert wurden.

14. Verfahren zur Fernsehsignalverarbeitung nach Anspruch 9 oder 10, dadurch gekennzeichnet, daß die Schritte zur Dekodierung der Auflistung und zum Vergleich der Programmkennungsinformation die Teilschritte eines Durchsuchens von Teletext-Übertragungen auf Programmquellenkennungsinformation mit einem Zeitkode, ein Erhalten einer Übereinstimmung mit einer entsprechenden Information der Programmkennungsinformation des laufenden Programms und danach einen Vergleich der beiden Zeitkodes, ein Erhalten einer Übereinstimmung der Zeitkodeinformation und anschließend einen Abruf der Titelinformation aus dem Speicher für die Anzeige einschließt.

15. Verfahren zur Fernsehsignalverarbeitung nach Anspruch 9, dadurch gekennzeichnet, daß der Schritt zur Dekodierung der Auflistung und der enthaltenen Programmquellenkennungsinformation ein Dekodieren der Programmtitelzeichen, die in der Auflistung enthalten sind, einschließt und ferner ein Dekodieren der Programmquellenkennungsinformation, welche digital kodierte, ursprünglich geplante Übertragungszeit einschließt, und das Übertragen der Senderkennungszeichen beinhaltet.

## Revendications

1. Dispositif de traitement de vidéosignaux, les vidéosignaux reçus incluant une information de représentation d'image et une pluralité de segments d'information supplémentaire concomitants comprenant une information d'identification de programme et un listage d'information de titre d'émission associée à l'information d'identification de source de programme, l'information supplémentaire étant encodée pendant les intervalles de suppression verticaux du signal émis, ce dispositif de traitement de vidéosignaux comprenant :
des moyens de syntonisation pour une réception sélective des vidéosignaux transmis par des sources de programme individuelles, les signaux reçus incluant de l'information de représentation d'image et des segments concomitants d'information supplémentaire,
un premier moyen de décodage de signal (U2) pour le décodage du dit listage incluant de l'information de titre d'émission et de l'information de source de programme associée,
des moyens de mémorisation (U5) pour le stockage et l'extraction d'au moins l'information de titre d'émission et de l'information d'identification de la source de programme associée décodées par le premier moyen de décodage de signal,
un second moyen de décodage (U6) pour le décodage de l'information d'identification de programme, cette information étant concomitante avec l'information de représentation d'image connexe,
un premier moyen de commande (U3) couplé aux moyens de syntonisation, aux premier (U2) et second (U6) moyens de décodage de signal et aux moyens de mémorisation (U5) pour un transfert sélectif des segments d'information supplémentaire du premier moyen de décodage de signal (U2) vers les moyens de mémorisation (U5), ce premier moyen de commande (U3) extrayant aussi ces segments des moyens de mémorisation (U5), **caractérisé en ce que**, de manière à afficher automatiquement l'information identifiant une émission télévisée en cours,
le premier moyen de commande (U3) comprend en outre:
des moyens permettant au second moyen de décodage de signaux (U6) de décoder l'information d'identification de programme concomitante avec l'information de représentation d'image connexe au début de la réception par les moyens de syntonisation de signaux provenant d'une source de programme individuelle,
des moyens permettant au premier moyen de décodage de signal (U2) d'identifier une information d'identification de programme dans le listage identique à l'information d'identification de programme décodée,
des moyens pour le stockage d'au moins l'information connexe de titre d'émission du listage dans les moyens de mémorisation (U5), cette information correspondant à l'émission télévisée en cours, et
des moyens de transfert de cette information de titre d'émission à partir des moyens de mémorisation (U5), pour un affichage automatique simultané de cette information et de l'information de représentation d'image.

2. Dispositif de traitement de vidéosignaux selon la revendication 1 **caractérisé en ce que** le second moyen de décodage de signal (U6) comprend des moyens de décodage d'information d'identification de programme incluant des caractères d'identification codés numériquement pour l'heure de diffusion prévue initialement et la station d'émission.

3. Dispositif de traitement de vidéosignaux selon la revendication 1 ou 2 **caractérisé en ce que** le listage comprend des informations télétexte et le premier moyen de décodage de signal comprend un système de décodage télétexte (U2).

4. Dispositif de traitement de vidéosignaux selon la revendication 3 **caractérisé en ce que** le premier moyen de commande (U3) fournit des premiers signaux de commande au premier moyen de décodage de signaux (U2), au début de la réception d'une émission en cours, de manière à ce que le premier moyen de décodage de signal (U2) cherche dans la transmission télétexte l'information d'identification de source de programme concordant avec l'information correspondante fournie par le second moyen de décodage de signal (U6).

5. Dispositif de traitement de vidéosignaux selon la revendication 3 ou 4 **caractérisé en ce que** le second moyen de décodage de signal (U6) comprend un système de décodage VPV ou VPS.

6. Dispositif de traitement de vidéosignaux selon la revendication 4 **caractérisé en ce que** le premier moyen de commande (U3) transfère l'information d'identification de source de programme à partir des moyens de mémorisation (U5) pour un affichage automatique simultané de cette information et de l'information de titre d'émission associée.

7. Dispositif de traitement de vidéosignaux selon la revendication 4 **caractérisé en ce que** l'information d'identification de programme et le listage comprennent tous les deux un code temps pour permettre une identification de programme supplémentaire, et le premier moyen de commande (U3) est actif de manière à amener le premier moyen de décodage de signal (U2) à chercher de manière séquentielle dans les transmissions télétexte, l'information d'identification de source de programme, à déterminer l'occurence d'une concordance avec l'information correspondante de l'information d'identification de programme de l'émission en cours et à ensuite comparer l'information d'identification du code temps fournie par le premier et le second moyen de décodage.

8. Dispositif de traitement de vidéosignaux selon la revendication 1 **caractérisé en ce que** le premier moyen de décodage de signal (U2) et les moyens de mémorisation (U5) sont activés de manière à stocker de l'information d'identification de source de programme et de l'information de titre d'émission avant la réception de signaux de représentation d'image.

9. Procédé de traitement de vidéosignaux reçus, ces vidéosignaux incluant de l'information de représentation d'image et une pluralité de segments d'information supplémentaire concomitante comprenant de l'information d'identification de programme avec un code temps d'identification de programme et un listage incluant de l'information de titre d'émission associée avec de l'information d'identification de source de programme , cette information supplémentaire étant encodée pendant les intervalles de suppression verticaux du vidéosignal, ce procédé consistant à :
syntoniser une unité de traitement de vidéo-signaux pour la réception sélective de signaux émis par une source de programme individuelle, les signaux reçus comprenant de l'information de représentation d'image et des segments concomitants d'information supplémentaire,
décoder le listage et l'information incluse de titre d'émission ainsi que l'information associée d'identification de source de programme, stocker le listage décodé et l'information incluse d'identification de source de programme en vue d'une extraction ultérieure,
décoder l'information d'identification de programme concomitante avec l'information de représentation d'image connexe,
comparer l'information d'identification de programme dernière citée avec l'information d'identification de source de programme incluse de manière à identifier l'information concordante, et **caractérisé par** l'affichage automatique d'au moins l'information de titre d'émission associée avec l'information de source de programme incluse, après identification de l'information d'identification de programme concordante, avec l'information de représentation d'image connexe.

10. Procédé de traitement de vidéosignaaux selon la revendication 9 **caractérisé en ce que** l'opération d'affichage comprend en outre l'affichage de l'information de source de programme concomitante après identification de l'information d'identification programme concordante.

11. Procédé de traitement de vidéosignaaux selon la revendication 9 ou 10 **caractérisé en ce que** le listage comprend de l'information télétexte et l'information d'identification de programme concomitante avec l'information de représentation d'image connexe comprend de l'information VPS.

12. Procédé de traitement de vidéosignaaux selon la revendication 11 **caractérisé en ce que** l'opération de décodage du listing comprend, dès la réception d'une émission en cours, la recherche dans les émissions télétexte concomitantes, d'une information d'identification de source de programme concordant avec l'information d'identification de programme revenant pendant les intervalles de suppression verticaux de l'émission en cours.

13. Procédé de traitement de vidéosignaaux selon la revendication 9 **caractérisé en ce que** l'opération de décodage du listage comprend la recherche de signaux télétexte reçus en cours d'émission ou reçus et stockés avant la réception d'une émission en cours.

14. Procédé de traitement de vidéosignaaux selon la revendication 9 ou 10 **caractérisé en ce que** les opérations de décodage du listage et de comparaison de l'information d'identification de source de programme comprennent l'opération partielle de recherche, dans les émissions télétexte, de l'information d'identification de source de programme avec un code temps, l'obtention d'une concordance avec l'information correspondante de l'information d'identification de programme, puis la comparaison des deux codes temps, l'obtention d'une concordance de l'information de code temps, puis l'extraction de l'information de titre correspondante hors de la mémoire, de manière à afficher cette information.

15. Procédé de traitement de vidéosignaaux selon la revendication 9 **caractérisé en ce que** l'opération de décodage du listage et de l'information d'identification de source de programme incluse comprend le décodage des caractères de titre d'émission contenus dans le listage ainsi que le décodage de l'information d'identification de source de programme comprenant l'heure de diffusion prévue initialement et encodée numériquement et la transmission des caractères d'identification de station.
